# EUROPÄISCHE PATENTSCHRIFT

(11) **EP 1 406 177 B1**
(45) Veröffentlichungstag und Bekanntmachung des Hinweises auf die Patenterteilung: **04.01.2012**
(21) Anmeldenummer: 03020971.2
(22) Anmeldetag: 16.09.2003
(51) Int. Cl.: G05B 19/05

(54) **Elektrisches Gerät zur Kommunikation mit einem Automatisierungssystem und korrespondierendes Kommunikationsverfahren**
Electonic communication device to communicate with an automation system and corresponding method
Appareil de communication électronique pour communiquer avec un système d'automatisation et méthode correspondante

(30) Priorität: 30.09.2002 DE 10245668
(43) Veröffentlichungstag der Anmeldung: 07.04.2004
(73) Patentinhaber: SIEMENS AKTIENGESELLSCHAFT, 80333 München (DE)
(72) Erfinder: Feld, Joachim, 90451 Nürnberg (DE); Fischer, Jan, 90475 Nürnberg (DE); Fischer, Richard, 90592 Schwarzenbruck (DE); Herberth, Harald, 90522 Oberasbach (DE); Lange, Ronald, 90766 Fürth (DE); List, Stefan, 90766 Fürth (DE); Meusser, Klaus, 90768 Fürth (DE); Schlereth, Michael, 91452 Wilhermsdorf (DE); Stühler, Peter, 91074 Herzogenaurach (DE); Weidmann, Rolf, 76185 Karlsruhe (DE)

(56) Entgegenhaltungen:
- DE-A1- 10 029 792
- DE-A1- 19 711 720
- DE-A1- 19 964 186

## Beschreibung

Die Erfindung betrifft das technische Gebiet der Kommunikation zwischen einem Automatisierungssystem und den darin zusammengefassten Automatisierungskomponenten sowie einem entfernten Kommunikationsteilnehmer, z.B. einem Servicegerät zur Wartung oder Diagnose des Automatisierungssystems. Konkret bezieht sich die Erfindung auf ein elektrisches Gerät mit dem eine spezielle Art der Kommunikation zwischen dem entfernten Kommunikationsteilnehmer und einzelnen oder allen Automatisierungskomponenten möglich ist sowie das dabei zum Einsatz kommende Kommunikationsverfahren.

Als Automatisierungssystem werden im folgenden zusammenfassend die Geräte und Installationen bezeichnet, die zur Steuerung und / oder Überwachung eines technischen Prozesses, z.B. eines Fertigungsprozesses, eingesetzt werden und an sich bekannt sind. Zu den Geräten gehören z.B. speicherprogrammierbare Steuerungen, dezentrale Peripheriegeräte, Bedien- und Beobachtungssysteme und dergleichen. Solche Geräte werden zusammenfassend als Automatisierungskomponenten bezeichnet. Zu den Installationen gehören Sensoren oder Aktoren zur Interaktion mit dem technischen Prozess und die zwischen den Automatisierungskomponenten und einzelnen Sensoren und Aktoren erforderliche Verdrahtung sowie ein die Automatisierungskomponenten kommunikativ verbindendes Kommunikationsnetzwerk, wie z.B. ein Feldbus.

Zu Service-, Wartungs- oder Diagnosezwecken ist es häufig sinnvoll, mit einem entfernten Kommunikationsteilnehmer, z.B. aus den Räumlichkeiten eines Dienstleistungsanbieters im Automatisierungsumfeld, auf das Automatisierungssystem zugreifen zu können. Dabei entsteht das Problem, dass der neu hinzukommende entfernte Kommunikationsteilnehmer ebenfalls eine eindeutige Adresse, z.B. eine eindeutige IP-Adresse (IP = Internet Protocol), benötigt. Dies führt allerdings zu einer bei Automatisierungsanwendungen nicht erwünschten Dynamik von Adressen, insbesondere IP-Adressen, und Routing-Informationen.

Ein bekannter Ansatz zur Lösung dieses Problems besteht darin, einen sogenannten Teleserviceadapter in der Kommunikationsstrecke zwischen entferntem Kommunikationsteilnehmer und Automatisierungssystem vorzusehen. Der entfernte Kommunikationsteilnehmer kommuniziert dann "nur" mit dem Teleserviceadapter. Dieser wiederum leitet vom entfernten Kommunikationsteilnehmer empfangene Daten an das Automatisierungssystem oder vom Automatisierungssystem empfangene Daten an den entfernten Kommunikationsteilnehmer weiter. Die Kommunikation des entfernten Kommunikationsteilnehmers mit dem Teleserviceadapter erfolgt mittels privater Protokolle, so dass der entfernte Kommunikationsteilnehmer für das Automatisierungssystem und deren Automatisierungskomponenten nicht sichtbar ist. Der entfernte Kommunikationsteilnehmer "versteckt" sich quasi hinter dem Teleserviceadapter. Im Automatisierungssystem ist damit nur die Adresse des Teleserviceadapter sichtbar. Diese Adresse ist konstant, da der Teleserviceadapter permanent an das Automatisierungssystem und das deren Automatisierungskomponenten untereinander kommunikativ verbindende Kommunikationsnetz angeschlossen ist.

Ein solcher Teleserviceadapter ist in der Druckschrift Siemens AG "Kurzanleitung PC Adapter TS Adapter" beschrieben.

Ein bekanntes Verfahren zur verdeckten Adressierung ist lokaler Kommunikationsteilnehmer in der Druckschrift DE 100 29 792 A1 - Lindemann et al. " Verfahren zur Umwandlung einer Netzwerkadresse" beschrieben.

Zum Zwecke des "Versteckens" von Adressen ist bei Nutzung des Internet Protokolls (IP) ein als NAT-Routing bezeichnetes Verfahren (NAT = Network Address Translation) bekannt. Ein solches NAT-Routing wird mit einer als NAT-Router bezeichneten Vorrichtung durchgeführt. Ein NAT-Router bedient einerseits eine Schnittstelle zum Anschluss eines Kommunikationsnetzes und andererseits eine Schnittstelle zur Kommunikation mit einem entfernten Kommunikationsteilnehmer. Die Schnittstelle zum Anschluss eines Kommunikationsnetzes ist bei gebräuchlichen Anwendungen eine Ethernetschnittstelle. Die Schnittstelle zur Kommunikation mit dem entfernten Kommunikationsteilnehmer wird als Modemschnittstelle bezeichnet. Ein NAT-Router wird dabei so eingesetzt, dass er ein "privates" Netzwerk, deren Kommunikationsteilnehmer über ein an die Ethernetschnittstelle angeschlossenes Kommunikationsnetz verbunden sind, mit einem "öffentlichen" Netzwerk, z.B. dem Internet, dem die Modemschnittstelle zugeordnet ist, verbindet.

Nachteilig ist jedoch, dass der NAT-Router in dieser Konfiguration nicht zur Anwendung beim kurzfristigen Anschluss eines entfernten Kommunikationsteilnehmers als Service- oder Programmiergerät an ein Automatisierungssystem geeignet ist. Nachdem das Automatisierungssystem dem privaten Netzwerk gemäß der obigen Beschreibung entspräche, wäre mit dem NAT-Router in der bekannten Konfiguration allenfalls ein Zugriff des Automatisierungssystems oder einer seiner Automatisierungskomponenten auf einen entfernten Kommunikationsteilnehmer möglich. Dies ist jedoch im Hinblick auf die für Service- und Wartungszwecke oder dergleichen erforderliche "Kommunikationsrichtung" gerade die entgegengesetzte Kommunikationsrichtung und daher ungeeignet.

Der Erfindung liegt daher die Aufgabe zugrunde, einen Teleserviceadapter sowie ein Kommunikationsverfahren unter Verwendung eines solchen Teleserviceadapters anzugeben, der auch für die oben genannten Einsatzzwecke geeignet ist.

Diese Aufgabe wird erfindungsgemäß mit den Merkmalen des Anspruchs 1 gelöst. Hinsichtlich des Teleserviceadapters ist dazu bei einem elektrischen Gerät mit einer Funktionalität als Teleserviceadapter, das eine kommunikative Verbindung zwischen einer zu einem Automatisierungssystem gehörigen Automatisierungskomponente und einem entfernten Kommunikationsteilnehmer ermöglicht, eine Verbindungs-Management-Komponente vorgesehen, die eine Kommunikation zwischen einer Automatisierungskomponente und dem für diese adresstechnisch nicht sichtbaren und räumlich entfernten Kommunikationsteilnehmer erlaubt. Entsprechend ist bei einem Verfahren zur Kommunikation eines entfernten Kommunikationsteilnehmers mit wenigstens einer zu einem Automatisierungssystem gehörigen Automatisierungskomponente, vorgesehen, dass der entfernte Kommunikationsteilnehmer eine Verbindung mit einem im Kommunikationsweg zwischen entferntem Kommunikationsteilnehmer und der oder jeder Automatisierungskomponente angeordneten Teleserviceadapter aufnimmt und dass der Teleserviceadapter eine Verbindung zu der Automatisierungskomponente mittels einer Verbindungs-Management-Komponente herstellt und die Kommunikation mit der Automatisierungskomponente übernimmt, wobei der entfernte Kommunikationsteilnehmer von der oder jeder Automatisierungskomponente aus nicht sichtbar ist.

Der Teleserviceadapter kann in einem eigenen elektrischen Gerät insbesondere als Softwareapplikation oder in Form eines funktionsäquivalenten ASICs (anwenderspezifischer integrierter Schaltkreis) als "elektrisches Gerät mit einem Teleserviceadapter" realisiert sein. Gleichfalls ist denkbar, dass ein ohnehin im Automatisierungssystem vorhandenes elektrisches Gerät, z.B. eine sogenannte Zentraleinheit einer speicherprogrammierbaren Steuerung oder eine einer speicherprogrammierbaren Steuerung zugeordnete Kommunikationsbaugruppe um den Teleserviceadapter bzw. dessen Funktionalität ergänzt wird. Auch ein derart ergänztes Gerät stellt ein "elektrisches Gerät mit einem Teleserviceadapter" dar.

Die Erfindung geht von der Erkenntnis aus, dass eine Möglichkeit zur Fernwartung oder Ferndiagnose von Automatisierungssystemen schon aufgrund unvertretbar hoher Kosten von Stillstandszeiten während der ansonsten erforderlichen Anreise von Servicepersonal unabdingbar ist. Mit der Erfindung ist bei Vermeidung der oben genannten Nachteile ein Zugriff auf das Automatisierungssystem von einem entfernten Rechner (Kommunikationsteilnehmer) möglich, so dass Service- und Diagnosemaßnahmen quasi jederzeit vorgenommen werden können.

Verbindungs-Management-Komponente im Teleserviceadapter dazu führt, dass für das Automatisierungssystem zu jedem Zeitpunkt ausschließlich die Adresse des Teleserviceadapters sichtbar und bekannt ist. Dadurch ist in Bezug auf mögliche oder zulässige Kommunikationswege und -beziehungen eine statische Konfiguration des Automatisierungssystems möglich.

Danach bietet die Verbindungs-Management-Komponente eine modifizierte NAT-Routingfunktionalität, die gegenüber einer bekannten, in der Praxis bewährten NAT-Routingfunktionalität um die Funktion der Richtungskonfiguration erweitert ist. D.h. gegenüber einer herkömmlichen NAT-Routingfunktionalität können das öffentliche Netz und das private Netz richtungsmäßig umgedreht werden.

Weitere Vorteile der Erfindung und ihrer Ausgestaltungen bestehen insbesondere darin, dass aktive Verbindungen zwischen dem entfernten Kommunikationsteilnehmer und einzelnen Automatisierungskomponenten mittels der Verbindungs-Management-Komponente jederzeit angezeigt und unterbrochen werden können. Ferner können Adressen vom Automatisierungskomponenten, die über den Teleserviceadapter erreichbar sind (freigeschaltete Adressen) angezeigt werden. Des Weiteren kann der Status oder Betriebszustand von Automatisierungskomponenten angezeigt oder verändert werden. D.h. die jeweilige Automatisierungskomponente kann freigeschaltet oder gesperrt werden. Schließlich können einzelne oder alle Verbindungswünsche mit einzelnen Automatisierungskomponenten angezeigt und erst nach Freigabe, z.B. durch Bedienpersonal, akzeptiert werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Darin zeigen:
- FIG 1: ein System mit einem öffentlichen und einem privaten Netzwerk, wobei eine Kommunikation zwischen Kommunikationsteilnehmern der beiden Netzwerke mittels eines NAT-Routers erfolgt und
- FIG 2: ein Automatisierungssystem mit einzelnen Automatisierungskomponenten und einem entfernten Kommunikationsteilnehmer, wobei zwischen diesen eine Kommunikation mittels eines Teleserviceadapters erfolgt.

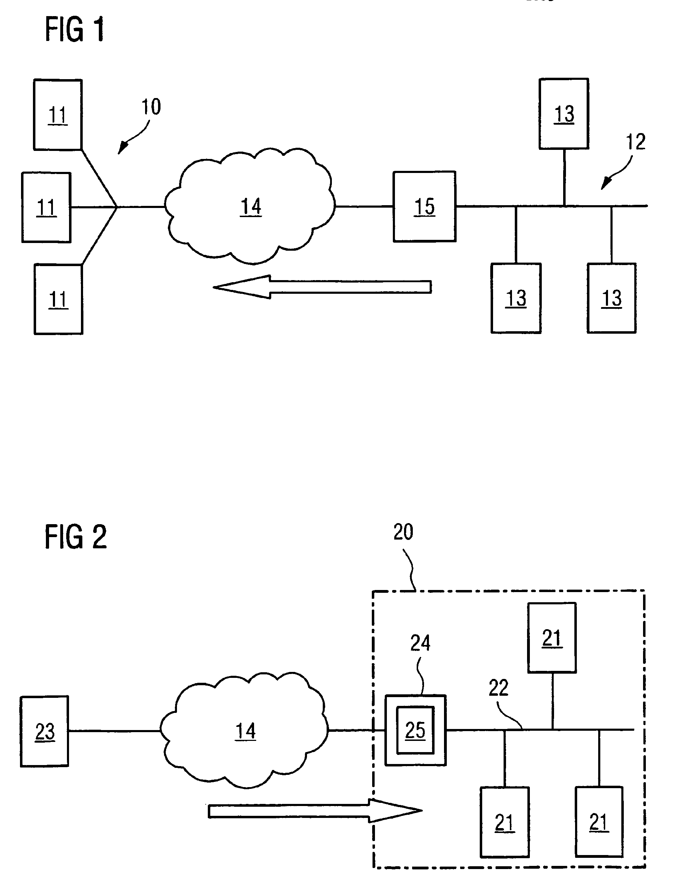

FIG 1 zeigt ein öffentliches Netzwerk 10 mit einer Anzahl von Servern 11 und ein privates Netzwerk 12 mit einer Anzahl von Bedienstationen 13. Öffentliches Netzwerk 10 und privates Netzwerk 12 sind entfernt voneinander angeordnet, aber untereinander kommunikativ, z.B. über das Internet 14, verbunden. Das öffentliche Netzwerk 10 kann dabei als Teil des Internet 14 aufgefaßt werden, das selbst auch ein öffentliches Netzwerk darstellt.

Die Verbindung zwischen jeweils einer Bedienstation 13 des privaten Netzwerks 12 und dem öffentlichen Netzwerk 10, z.B. in Form eines Zugriffs auf einen der Server 11, erfolgt über einen NAT-Router 15. Der NAT-Router 15 ist Kommunikationsteilnehmer im öffentlichen Netz 10 und hat entsprechend in Bezug auf das öffentliche Netz 10 eine eindeutige Adresse. Der NAT-Router 15 fungiert damit als Schnittstelle zwischen privatem und öffentlichem Netzwerk 12 bzw. 10. Dies ist durch den Blockpfeil und dessen Richtung ausgehend vom privaten Netzwerk 12 veranschaulicht. Der NAT-Router 15 ermöglicht jeder Bedienstation 13 des privaten Netzwerks 12, die selbst nicht Kommunikationsteilnehmer im öffentlichen Netzwerk 10 ist, einen Zugriff auf das öffentliche Netzwerk 10. Dazu kommuniziert die jeweilige Bedienstation 13 mit dem NAT-Router 15 und der NAT-Router 15 leitet die jeweiligen Daten in das öffentliche Netzwerk 10 weiter. Umgekehrt kommuniziert z.B. bei einer Übermittlung von Daten von einem Server 11 zur einer Bedienstation 13 der Server 11 nur mit dem NAT-Router 15, der die empfangenen Daten dann zur jeweiligen Bedienstation 13 weiterleitet.

Der NAT-Router 15 umfaßt zur korrekten Zuordnung von Daten für den jeweiligen Empfänger, d.h. die jeweilige Bedienstation 13, die nicht an einer in den Daten enthaltenen Adresse identifizierbar ist, nicht dargestellte, an sich bekannte Mittel. Eine derartige Zuordnung ist erforderlich, weil der Sender, der jeweilige Server 11, keine Informationen über den eigentlichen Empfänger hat.

Der NAT-Router 15 ist darüber hinaus derart konfigurierbar, dass nur einzelnen, ausgewählten Bedienstationen 13 ein Zugriff auf das öffentliche Netz 10 erlaubt ist, während anderen Bedienstationen ein solcher Zugriff verwehrt ist.

FIG 2 zeigt ein Automatisierungssystem 20 mit einer Anzahl von Automatisierungskomponenten 21 die untereinander durch ein automatisierungssystem-internes Kommunikationsnetz 22, z.B. in Form eines Feldbusses, kommunikativ verbunden sind. Bei den Automatisierungskomponenten 21 handelt es sich z.B. um eine oder mehrere an sich bekannte speicherprogrammierbare Steuerungen, dezentrale Peripheriegeräte, Bedien- und Beobachtungsstationen und dergleichen.

In einem Wartungs- oder Servicefall kann sich das Erfordernis eines Zugriffs auf das Automatisierungssystem 20 von einem entfernten Kommunikationsteilnehmer 23 ergeben. Der entfernten Kommunikationsteilnehmer 23 ist z.B. ein Programmiergerät oder ein Personalcomputer, auf dem als Softwareapplikation eine zur Wartung, Diagnose oder Programmierung einzelner oder aller Automatisierungskomponenten 21 geeignete Entwicklungsumgebung vorgehalten ist.

Ein Zugriff seitens des entfernten Kommunikationsteilnehmers 23 auf das Automatisierungssystem 20 oder einzelne Automatisierungskomponenten 21 erfolgt mittels eines im Kommunikationsweg angeordneten Teleserviceadapters 24. Der Kommunikationsweg kann dabei je nach tatsächlicher räumlicher Entfernung des entfernten Kommunikationsteilnehmers 23 auch das Internet 14 umfassen.

Eine derartige Kommunikation umfaßt zunächst eine Kommunikation zwischen dem entfernten Kommunikationsteilnehmer 23 und dem Teleserviceadapter 24 und des weiteren eine Kommunikation zwischen dem Teleserviceadapter 24 und der jeweiligen Automatisierungskomponente 21. D.h. der Teleserviceadapter 24 fungiert als Schnittstelle zwischen entferntem Kommunikationsteilnehmer 23 und Automatisierungssystem 20. Der Teleserviceadapter 24 beinhaltet eine Verbindungs-Management-Komponente 25 in Form einer modifizierten NAT-Routingfunktionalität. Diese ermöglicht, dass vom entfernten Kommunikationsteilnehmer 23 gesandte Daten zum tatsächlichen Empfänger, nämlich der jeweiligen Automatisierungskomponente 21, gelangen oder dass vom entfernten Kommunikationsteilnehmer 23 angeforderte Daten von der richtigen Automatisierungskomponente 21 bereit gestellt werden.

Nachfolgend soll die Modifikation der NAT-Routingfunktionalität beschrieben werden. Ein bekannter NAT-Router 15 (FIG 1) ermöglicht für einen einzelnen, hinter dem NAT-Router 15 eindeutig adressierbaren Kommunikationsteilnehmer 13 einen Zugriff auf eine Vielzahl von in einem öffentlichen Netzwerk 10 zusammengefassten, je für sich als "verborgene", d.h. nicht sichtbare Station ausgebildete Server 11 (FIG 1). Der Teleserviceadapter 24 ermöglicht demgegenüber einen Zugriff eines entfernten und nicht sichtbaren Kommunikationsteilnehmers 23 auf einzelne, hinter dem Teleserviceadapter 24 sichtbare Kommunikationsteilnehmer, z.B. einzelne eindeutig adressierbare Automatisierungskomponenten 21. Die modifizierte NAT-Routingfunktionalität beinhaltet also quasi eine Umkehr der Routingfunktionalität. Dies ist in FIG 2 auch durch den im Vergleich zu FIG 1 in seiner Richtung umgekehrten Blockpfeil veranschaulicht.

Der entfernte Kommunikationsteilnehmer 23 und der Teleserviceadapter 24 bilden ein eigenständiges erstes Netzwerk, wobei nur der Teleserviceadapter 24 vom Automatisierungssystem 20 aus sichtbar ist. D.h. für die Automatisierungskomponente 21 ist der entfernte Kommunikationsteilnehmer 23 nicht sichtbar. Dies ist besonders vorteilhaft, da somit eine durch Hinzufügen oder Entfernen von Kommunikationsteilnehmern 23 umfangreiche und aufwändige dynamische Anpassung von Adressen sicher vermieden ist. Das automatisierungssystem-interne Kommunikationsnetz 22 stellt daneben ein zweites, ebenfalls unabhängiges Netzwerk dar. Mittels des Teleserviceadapters 24 wird die Verbindung zwischen beiden Netzwerken ermöglicht. Das erste Netzwerk zwischen entfernten Kommunikationsteilnehmer 23 und Teleserviceadapter 24 entspricht dabei einem privaten Netzwerk 12, welches vom zweiten, unabhängigen Netzwerk, dem automatisierungssystem-internen Kommunikationsnetz 22, verborgen, d.h. nicht sichtbar ist.

Erfindungsgemäß wird damit eine Kommunikation eines dem privaten Netzwerk zugeordneten externen Rechners 23 oder Kommunikationsteilnehmers mit einer dem öffentlichen Netzwerk zugeordneten Automatisierungskomponente unter Verwendung eines ebenfalls dem öffentlichen Netzwerk zugeordneten Teleserviceadapters 24 möglich.

## Patentansprüche

1. Elektrisches Gerät mit einer Funktionalität als Teleserviceadapter (24), das eine kommunikative Verbindung zwischen einer zu einem Automatisierungssystem (20) gehörigen Automatisierungskomponente (21) und einem entfernten Kommunikationsteilnehmer (23) ermöglicht,
**gekennzeichnet durch**
eine Verbindungs-Management-Komponente (25), die eine Kommunikation zwischen einer Automatisierungskomponente (21) und dem von der Automatisierungskomponente (21) adresstechnisch nicht sichtbaren, entfernten Kommunikationsteilnehmer (23) erlaubt, wobei
die Verbindungs-Management-Komponente eine modifizierte NAT-Routingfunktionalität aufweist, die eine Funktion zur Richtungskonfiguration aufweist.

2. Elektrisches Gerät nach Anspruch 1,
wobei die Verbindungs-Management-Komponente (25) zur Anzeige und Unterbrechung aktiver Verbindungen zwischen dem entfernten Kommunikationsteilnehmer und einzelnen Automatisierungskomponenten ausgebildet ist.

3. Verfahren zur Kommunikation eines entfernten Kommunikationsteilnehmers (23) mit wenigstens einer zu einem Automatisierungssystem (20) gehörigen Automatisierungskomponente (21),
**dadurch gekennzeichnet, dass** der entfernte Kommunikationsteilnehmer (23) eine Verbindung mit einem im Kommunikationsweg zwischen entferntem Kommunikationsteilnehmer (23) und der oder jeder Automatisierungskomponente (21) angeordneten Teleserviceadapter (24) aufnimmt und dass der Teleserviceadapter (24) eine Verbindung zu der Automatisierungskomponente (21) mittels einer Verbindungs-Management-Komponente (25) herstellt und die Kommunikation mit der Automatisierungskomponente (21) übernimmt, wobei der entfernte Kommunikationsteilnehmer (23) von der oder jeder Automatisierungskomponente (21) aus nicht sichtbar ist, wobei durch die Verbindungs-Management-Komponente eine modifizierte NAT-Routingfunktionalität mit einer Funktion zur Richtungskonfiguration durchgeführt wird.

4. Kommunikationsverfahren nach Anspruch 3, wobei die Verbindungs-Management-Komponente zur Anzeige und Unterbrechung aktiver Verbindungen zwischen dem entfernten Kommunikationsteilnehmer und einzelnen Automatisierungskomponenten verwendet wird.

## Claims

1. Electric appliance having a functionality as a teleservice adapter (24) which allows a communicative connection between an automation component (21) associated with an automation system (20) and a remote communication subscriber (23),
**characterized by**
a connection management component (25) which permits communication between an automation component (21) and the remote communication subscriber (23), the address of which is not visible to the automation component (21), wherein the connection management component has a modified NAT routing functionality which has a function for direction configuration.

2. Electric appliance according to Claim 1,
wherein the connection management component (25) is designed to display and interrupt active connections between the remote communication subscriber and individual automation components.

3. Method for a remote communication subscriber (23) to communicate with at least one automation component (21) associated with an automation system (20),
**characterized in that** the remote communication subscriber (23) picks up a connection to a teleservice adapter (24) arranged in the communication path between the remote communication subscriber (23) and the or each automation component (21) and **in that** the teleservice adapter (24) sets up a connection to the automation component (21) using a connection management component (25) and undertakes the communication with the automation component (21), wherein the remote communication subscriber (23) is not visible from the or each automation component (21), wherein the connection management component performs a modified NAT routing functionality with a function for direction configuration.

4. Communication method according to Claim 3, wherein the connection management component is used to display and interrupt active connections between the remote communication subscriber and individual automation components.

## Revendications

1. Appareil électronique ayant une fonctionnalité en tant qu'adaptateur ( 24 ) de téléservice, qui rend possible une liaison de communication entre un élément ( 21 ) d'automatisation appartenant à un système ( 20 ) d'automatisation et un participant ( 23 ) éloigné à la communication,
**caractérisé par**
un élément ( 25 ) de gestion de la liaison, qui permet une communication entre un élément ( 21 ) d'automatisation et le participant ( 23 ) éloigné à la communication non visible du point de vue de la technique d'adresse par l'élément ( 21 ) d'automatisation, dans lequel
l'élément de gestion de la liaison a une fonctionnalité d'acheminement NAT modifiée, qui a une fonction pour la configuration de direction.

2. Appareil électronique suivant la revendication 1,
dans lequel l'élément ( 25 ) de gestion de la liaison est constitué pour l'indication et l'interruption de liaisons actives entre le participant éloigné à la communication et des éléments individuels d'automatisation.

3. Procédé pour la communication d'un participant ( 23 ) éloigné à la communication avec au moins un élément ( 21 ) d'automatisation appartenant à un système ( 20 ) d'automatisation,
**caractérisé en ce que** le participant ( 23 ) éloigné à la communication reçoit une liaison avec un adaptateur ( 24 ) de téléservice monté dans la voie de communication entre le participant ( 23 ) éloigné à la communication et le ou chaque élément ( 21 ) d'automatisation et **en ce que** l'adaptateur ( 24 ) de téléservice ménage une liaison vers l'élément ( 21 ) d'automatisation au moyen d'un élément ( 25 ) de gestion de la liaison et prend en charge la communication avec l'élément ( 21 ) d'automatisation, le participant ( 23 ) éloigné à la communication n'étant pas visible par le ou par chaque élément ( 21 ) d'automatisation, une fonctionnalité d'acheminement NAT modifiée ayant une fonction de configuration de direction étant effectuée par l'élément de gestion de la liaison.

4. Procédé pour la communication suivant la revendication 3, dans lequel on utilise l'élément de gestion de la liaison pour l'indication et l'interruption de liaisons actives entre le participant éloigné à la communication et divers éléments d'automatisation.
